# EUROPÄISCHE PATENTANMELDUNG

(11) **EP 4 759 122 A1**
(43) Veröffentlichungstag der Anmeldung: **17.06.2026**
(21) Anmeldenummer: 24222685.0
(22) Anmeldetag: 21.12.2024
(51) Int. Cl.: A01D 57/20, A01D 61/00

(54) **EMTEVORSATZ ZUR GANZPFLANZENEMTE**

(30) Priorität: 16.12.2024 EP 24220261
(71) Anmelder: Deere & Company, Moline, IL 61265 (US)
(72) Erfinder: Schroeder, Maximilian, Mannheim (DE); Wuebbels, Richard, Mannheim (DE); Leveling, Ralf, Mannheim (DE); Schlamann, Frank, Mannheim (DE); Bongert, Dirk, Mannheim (DE)
(74) Vertreter: Holst, Sönke

(57) **Zusammenfassung**

Ein Erntevorsatz (20) zur Ganzpflanzenernte, der an einer Erntemaschine (10) anbringbar und in einer Vorwärtsrichtung (V) über ein Feld bewegbar ist, umfasst:
ein tragendes Gestell (36),
eine Anzahl an nebeneinander angeordneten Mäh- und Einzugseinrichtungen (40) zum Abschneiden und Abfördern von Pflanzen vom Feld,
ein erstes Querförderband (46) und ein zweites Querförderband (48) zur Querförderung der durch die Mäh- und Einzugseinrichtungen (40) aufgenommenen Pflanzen in Richtung auf die Längsmittelebene des Erntevorsatzes (20),
ein Abgabeförderband (50) zur Förderung der von den Querförderbändern (46, 48) einlaufenden Pflanzen nach hinten zu einer rückwärtigen Abgabestelle des Erntevorsatzes (20), und
eine unterschlächtig arbeitende, langgestreckte Fördertrommel (52) mit einer sich quer zur Vorwärtsrichtung (V) erstreckenden Drehachse, wobei die Fördertrommel (52) oberhalb des Abgabeförderbandes (50), der Abgabeöffnung vorgelagert, durch eine nur in der Mitte der Fördertrommel (52) vorgesehene Abstützung mit dem Gestell (36) verbunden ist.

## Beschreibung

Die Erfindung betrifft einen Erntevorsatz zur Ganzpflanzenernte, der an einer Erntemaschine anbringbar und in einer Vorwärtsrichtung über ein Feld bewegbar ist.

### Technologischer Hintergrund

Zur Ernte vollständiger, stängelartiger Pflanzen, wie Getreide oder Gras, werden im Stand der Technik unter anderem Erntevorsätze mit Querförderbändern (so genannte "Draper Belts") verwendet. Für die Getreideernte sind Schneidwerke bekannt, welche die Pflanzen mittels einer Haspel festhalten bzw. nach hinten fördern und mit Mähmessern abschneiden. Die abgeschnittenen, oberirdischen Teile der Pflanzen kommen auf den Querförderbändern zu liegen und werden durch diese zur Mitte des Erntevorsatzes transportiert. Dort werden sie durch ein mittleres Förderband übernommen, das sie nach hinten abfördert und durch eine rückwärtige Öffnung in einen Schrägförderer abgibt. Der Schrägförderer fördert die Pflanzen in eine selbstfahrende Erntemaschine, in der Regel einen Mähdrescher.

Erntevorsätze mit Querförderbändern werden auch in Verbindung mit Feldhäckslern zur Ernte von Grüngut (Gras oder anderen, niedrigeren stängelartigen Pflanzen, wie Getreidepflanzen für die Ganzpflanzensilage) mittels einer Aufnehmertrommel (Pick-up) oder eines Trommel- oder Scheibenmähwerks (EP 1 256 272 A1, EP 3 058 802 A1) oder unteren Schneidscheiben und koaxial darüber angeordneten Förderrotoren (DE 10 2015 206 845 A1 für die Ernte von kleineren Pflanzen als Mais) verwendet. Die EP 4 356 713 A1 zeigt weiterhin einen für die Maisernte vorgesehenen Erntevorsatz mit Querförderbändern, denen Mäh- und Einzugseinrichtungen mit unteren Schneidscheiben und jeweils mehreren, koaxial darüber angeordneten Förderrotoren vorgelagert sind.

Bei Erntevorsätzen mit Querförderbändern sind oftmals mit Fingern, Förderschnecken oder starren Mitnehmern ausgestattete Fördertrommeln oberhalb der Abgabeöffnung angeordnet, die das Erntegut nach hinten fördern. Diese Fördertrommeln sind an beiden Enden am tragenden Gestell des Erntevorsatzes gelagert, wobei die Drehachse gegenüber der Rückwand nach hinten versetzt sein kann (EP 2 772 130 A1) oder sich davor befindet, sodass die Fördertrommel durch Aufhängungen am Gestell befestigt wird, die sich von der Rückwand nach vorn erstrecken (US 2008/0295474 A1). Im ersten Fall dient die Fördertrommel im Wesentlichen nur dazu, das Erntegut nach hinten einzuziehen, während sie im zweiten Fall in einem gewissen Maß auch von außen, d.h. von den Querförderbändern einlaufendes Erntegut erfassen kann. Hier haben sich bei der Ernte von größeren Pflanzen, wie Mais, jedoch die seitlichen Aufhängungen als problematisch erwiesen, denn sie führen dazu, dass sich die von der Seite her einlaufenden Pflanzen daran aufstauen.

Bei bisherigen Erntevorsätzen für Mais, bei denen die Querförderung durch die Rückseiten der Mäh- und Einzugseinrichtungen und ggf. durch Querfördertrommeln und die Umlenkung zur Erntemaschine nach hinten durch Abgabefördertrommeln erfolgt, stellt sich in manchen Fällen das Problem, dass Pflanzen in der Mitte des Erntevorsatzes beim Umlenken nach hinten nicht von den Abgabefördertrommeln erfasst werden, sodass diese Pflanzen quer vor den Abgabefördertrommeln liegen bleiben. Um diese Pflanzen nach unten und hinten zu drücken, wurde ein Umlenkelement vorgeschlagen, das sich vor und über dem Querförderkanal der Erntevorsatzes und dem Einzugskanal der Erntemaschine befindet (DE 101 08 516 A1). Das Umlenkelement kann als mittig gelagerte, um die Querachse rotierende Walze mit dreieckigem Querschnitt ausgeführt sein und dient dazu, sich eventuell vor den Abgabefördertrommeln ansammelndes Erntegut nach unten oder hinten zu drücken.

### Aufgabe

Die vorliegende Erfindung hat sich daher zur Aufgabe gesetzt, einen gegenüber dem Stand der Technik verbesserten, mit Querförderbändern ausgestatten Erntevorsatz zur Ganzpflanzenernte bereit zu stellen, bei dem einer oder mehrere der erwähnten Nachteile bezüglich der oberhalb der Abgabeöffnung angeordneten Fördertrommeln nicht oder in vermindertem Maße auftreten.

### Erfindung

Die vorliegende Erfindung wird durch die Patentansprüche definiert.

Ein Erntevorsatz zur Ganzpflanzenernte, der an einer Erntemaschine anbringbar und in einer Vorwärtsrichtung über ein Feld bewegbar ist, umfasst:
ein tragendes Gestell,
eine Anzahl an nebeneinander angeordneten Mäh- und Einzugseinrichtungen zum Abschneiden und Abfördern von Pflanzen vom Feld,
ein erstes Querförderband und ein zweites Querförderband zur Querförderung der durch die Mäh- und Einzugseinrichtungen aufgenommenen Pflanzen in Richtung auf die Längsmittelebene des Erntevorsatzes,
ein Abgabeförderband zur Förderung der von den Querförderbändern einlaufenden Pflanzen nach hinten zu einer rückwärtigen Abgabestelle des Erntevorsatzes, und
eine unterschlächtig arbeitende, langgestreckte Fördertrommel mit einer sich quer zur Vorwärtsrichtung erstreckenden Drehachse, wobei die Fördertrommel oberhalb des Abgabeförderbandes, der Abgabeöffnung vorgelagert, durch eine nur in der Mitte der Fördertrommel vorgesehene Abstützung mit dem Gestell verbunden ist.

Auf diese Weise erreicht man, dass insbesondere die von außen, über die Querförderbänder einlaufende Erntegut sich nicht oder zumindest mit geringerer Wahrscheinlichkeit an der Abstützung der Fördertrommel staut.

### Ausführungsbeispiel

In den Zeichnungen ist ein nachfolgend näher beschriebenes Ausführungsbeispiel dargestellt. Es zeigt:
- Fig. 1: eine schematische, seitliche Ansicht einer Erntemaschine mit einem Erntevorsatz zur Ganzpflanzenernte,
- Fig. 2: eine perspektivische Ansicht des Erntevorsatzes der Figur 1 von der linken Seite und schräg vorn betrachtet,
- Fig. 3: eine vergrößerte, perspektivische Ansicht einer Fördertrommel des Erntevorsatzes, und
- Fig. 4: eine perspektivische Ansicht der Fördertrommel mit abgenommenen Walzenmänteln.

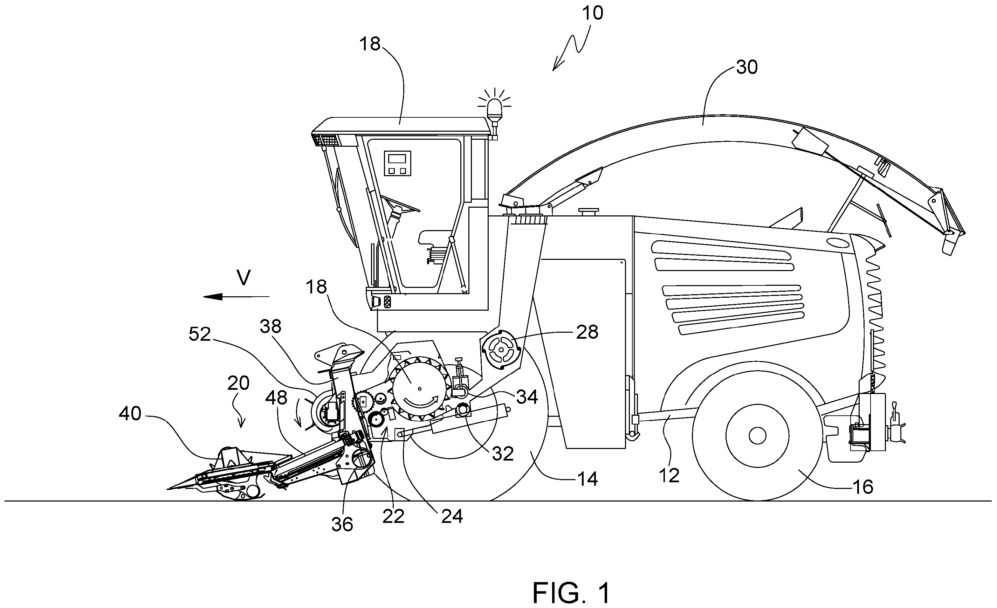

In der Figur 1 ist eine Erntemaschine in Form eines selbstfahrenden Feldhäckslers 10 in schematischer Seitenansicht dargestellt. Der Feldhäcksler 10 baut sich auf einem Rahmen 12 auf, der von vorderen angetriebenen Rädern 14 und lenkbaren rückwärtigen Rädern 16 getragen wird. Die Bedienung des Feldhäckslers 10 erfolgt von einer Fahrerkabine 18 aus, von der aus ein Erntevorsatz 20 zur Ganzpflanzenernte einsehbar ist. Mittels des Erntevorsatzes 20 vom Boden aufgenommenes Erntegut, z. B. Mais oder andere, stängelartige Pflanzen, wird über einen Einzugsförderer 22 mit Vorpresswalzen, die innerhalb eines Einzugsgehäuses 24 an der Frontseite des Feldhäckslers 10 angeordnet sind, einer unterhalb der Fahrerkabine 18 angeordneten Häckseltrommel 26 zugeführt, die es im Zusammenwirken mit einer Gegenschneide in kleine Stücke häckselt und es nach Durchlauf durch eine Nachbearbeitungseinrichtung mit zwei Prozessorwalzen 32, 34 einer Fördervorrichtung 28 aufgibt. Das Gut verlässt die Erntemaschine 10 zu einem nebenher fahrenden Transportfahrzeug über einen um eine etwa vertikale Achse drehbaren und in der Neigung verstellbaren Auswurfkrümmer 30. Im Folgenden beziehen sich Richtungsangaben, wie seitlich, unten und oben, auf die Vorwärtsrichtung V des Feldhäckslers 10, die in der Figur 1 nach links verläuft.

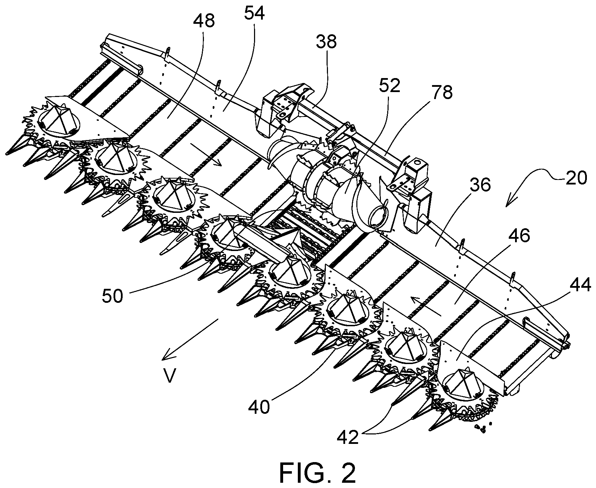

Die Figur 2 zeigt eine perspektivische Ansicht des Erntevorsatzes 20, der sich zur Ganzpflanzenernte eignet. Der Erntevorsatz 20 baut sich auf einem tragenden Gestell 36 auf, das in der Mitte mit einem rückwärtigen Anbaurahmen 38 versehen ist. Der Anbaurahmen 38 dient zur Anbringung des Erntevorsatzes 20 am Einzugsgehäuse 24 des Feldhäckslers 10. Der Anbaurahmen 38 weist als Abgabestelle für die geernteten Pflanzen eine mittige Abgabeöffnung auf, durch welche von einem Feld aufgenommenes Erntegut in den Einzugsförderer 22 abgebbar ist.

Das tragende Gestell 36 haltert an seiner Vorderseite eine Anzahl (im dargestellten Ausführungsbeispiel acht) von Mäh- und Einzugseinrichtungen 40, wie sie an üblichen Erntevorsätzen zur Ernte größerer stängelartiger Pflanzen (insbesondere Mais) verwendet werden. Die Mäh- und Einzugseinrichtungen 40 umfassen in an sich bekannter Weise, vgl. EP 0 760 200 A1, untere Schneidscheiben (rotierend oder feststehend) und darüber angeordnete Förderscheiben mit um ihren Umfang verteilten Aussparungen zur Aufnahme von Pflanzen, die mittels der Schneidscheiben von ihren im Boden verbliebenden Wurzeln abgeschnitten werden. Den Mäh- und Einzugseinrichtungen 40 sind Stängelteiler 42 vorgelagert. Die Mäh- und Einzugseinrichtungen 40 (abgesehen von den gegensinnig dazu arbeitenden, äußeren Mäh- und Einzugseinrichtungen 40) fördern im Erntebetrieb die Pflanzen an ihren Vorderseiten zunächst seitlich nach außen, dann nach hinten und letztlich mit ihren Rückseiten nach innen und geben die Pflanzen gegenüber der Drehachse der Mäh- und Einzugseinrichtungen 40 nach außen hin versetzt ab, da die Pflanzen dort durch sich in den Hüllkreis der Förderscheiben der Mäh- und Einzugseinrichtungen 40 eindringende Abstreifer 44 aus den Aussparungen der Förderscheiben der Mäh- und Einzugseinrichtungen 40 nach hinten und innen hinausgehoben werden. Die Pflanzen werden demnach nach hinten und innen hin abgegeben und gelangen, insbesondere durch nachfolgende, von vorn einlaufende Pflanzen nach hinten gedrückt, auf ein Querförderband 46 oder 48, das sich im Erntebetrieb nach innen, in Richtung auf die Längsmittelebene des Erntevorsatzes 20 hin bewegt. In der Mitte des Erntevorsatzes 20 wird das Erntegut durch ein Abgabeförderband 50 übernommen, welches das von den Querförderbändern 46 und 48 einlaufende Erntegut nach hinten durch die Abgabeöffnung des Anbaurahmens 38 und in den Einzugsförderer 22 verbringt. Die beiden der Längsmittelebene des Erntevorsatzes 20 direkt benachbarten, mittleren Mäh- und Einzugseinrichtungen 40 geben ihr Erntegut direkt dem Abgabeförderer 50 auf. Rückwärtig der Querförderbänder 46, 48 sind Rückwände 54 vorgesehen. In den Figuren erstrecken sich die Längsachsen (Förderrichtungen) der Querförderbänder 46, 48 quer zur Vorwärtsrichtung V. Man könnte sie auch in V-Form anordnen, wie in EP 3 298 879 A1.

Der Erntevorsatz 20 dient somit, da die kompletten, abgeschnittenen Pflanzen in die Erntemaschine gefördert werden, zur Ganzpflanzenernte von größeren stängelartigen Pflanzen, wie Mais. Die Mäh- und Einzugseinrichtungen 40 können (ggf. mit geringfügigen Modifikationen, vgl. EP 0 824 856 A2) auch zur Einbringung so genannter Ganzpflanzensilage, d.h. von Getreidepflanzen, dienen.

Oberhalb des Abgabeförderers 50 ist, der rückwärtigen Abgabeöffnung und der Rückwand 54 vorgelagert, eine langgestreckte (d.h. der Durchmesser ist kleiner als die axiale Länge) Fördertrommel 52 vorgesehen, welche das Einführen der Pflanzen in die Abgabeöffnung erleichtert. Die Fördertrommel 52 umfasst beidseits der Längsmittelebene jeweils einen Mantel, der einen mittigen, zylindrischen Teil 60 und äußere konische Bereiche 56 ausgeführt umfasst. Die konischen Bereiche 56 der Fördertrommel 52 sind mit wendelförmigen Mitnehmern 58 versehen, während der mittige, zylindrische Teil 60 der Fördertrommel 52 mit sich axial erstreckenden, gezahnten Mitnehmern 62 ausgestattet ist. Die Fördertrommel 52 ist in Richtung des in der Figur 1 dargestellten Pfeils antreibbar.

Die bezüglich der Vorwärtsrichtung V horizontal oder leicht nach vorn und unten geneigt angeordneten Querförderbänder 46, 48 bewegen sich im Erntebetrieb mit ihren Oberseiten nach innen, während das bezüglich der Vorwärtsrichtung V horizontal oder leicht nach hinten und oben geneigt angeordnete Abgabeförderband 50 sich dann mit seiner Oberseite nach hinten bewegt, wie in der Figur 2 durch die Pfeile angedeutet. Der Antrieb der Mäh- und Einzugseinrichtungen 40 sowie der Querförderbänder 46, 48 und des Abgabeförderbands 50 sowie ggf. der Fördertrommel 52 kann über einen mechanischen Antriebsstrang vom den Erntevorsatz 20 tragenden Feldhäcksler 10 oder durch zugeordnete Elektro- oder Hydraulikmotoren (nicht gezeigt) erfolgen, die eine Verstellung der Fördergeschwindigkeit und eine Anpassung an die Fördergeschwindigkeit im Einzugsförderer 22 des Feldhäckslers 10 und somit an die Schnittlänge ermöglichen.

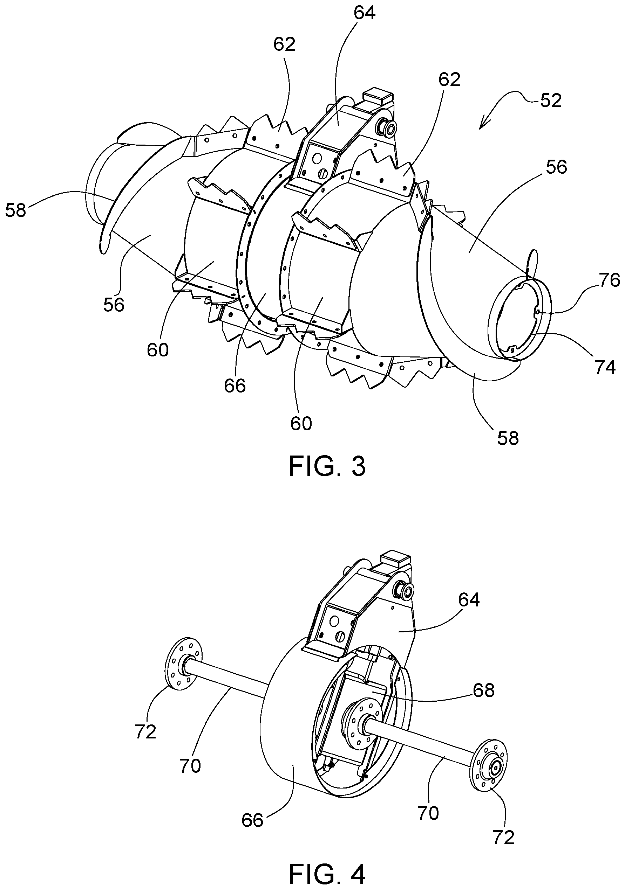

Es wird nun auf die Figuren 3 und 4 Bezug genommen, in denen der Aufbau der Fördertrommel 52 und ihre Ankopplung am Gestell 36 des Erntevorsatzes 20 dargestellt werden. Die zur Längsmittelebene des Erntevorsatzes 20 symmetrische Fördertrommel 52 ist durch eine mittige Schwinge 64 an einer oberen Querstrebe 78 des Anbaurahmens 38 befestigt. Die Schwinge 64 ist vorzugsweise gegenüber der Querstrebe 78 frei um die Querachse drehbar, insbesondere zwischen unteren und oberen Anschlägen (nicht gezeigt), die den Drehwinkel der Schwinge 64 um die Querachse fest oder verstellbar einschränken. Demnach kann die Fördertrommel 52 abhängig vom Erntegutdurchsatz nach oben hin ausweichen und sie verdichtet das Erntegut durch ihr Eigengewicht.

Die Schwinge 64 ist fest mit einem zylindrischen Ring 66 verbunden, der innenseitig einen Antrieb 68 beinhaltet, der sich an der Schwinge 64 und/oder am Ring 66 abstützt. Der Antrieb 68 enthält einen Hydraulik- oder Elektromotor, der über (nicht gezeigte) Leitungen, die durch die Schwinge 64 und entlang der oder durch die Querstrebe 38 verlaufen, mit einer Druck- oder Stromquelle verbunden, die sich insbesondere an Bord der Erntemaschine 10 befindet. Bei einer anderen Ausführungsform könnten die Leitungen und der Motor durch einen mechanischen Antriebsstrang, z.B. eine flexible Welle oder kämmende Stirnzahnräder, ersetzt werden, der den Antrieb 68 mit einer Antriebsquelle verbindet.

Der Antrieb 68 ist beidseitig mit je einer angetriebenen Ausgangswelle 70 verbunden, die sich in Querrichtung erstreckt und an ihrem äußeren Ende einen Flansch 72 trägt. An den Flanschen 72 werden die konischen Bereiche 56 der Fördertrommel 52 angeschraubt, wozu an den äußeren Endbereichen der konischen Bereiche 56 innenseitige Stützringe 74 mit Öffnungen 76 zur Aufnahme der Schrauben vorgesehen sind, die in Gewindelöcher der Flansche 72 geschraubt werden. Die zylindrischen Teile 60 der Fördertrommel 52 sind mit den konischen Bereichen 56 fest verbunden (verschweißt o. dgl.) oder einteilig hergestellt. Die inneren Enden der zylindrischen Teile 60 überdecken den Ring 66 in axialer Richtung. Man könnte zwischen den inneren Enden der zylindrischen Teile 60 und dem Ring 66 weiterhin Dichtungen und/oder Lagerelemente anbringen.

Es ist erkennbar, dass die Drehachse der Fördertrommel 52 sich vor der Rückwand 54 befindet und ihre konischen Bereiche 56 mit den wendelförmigen Mitnehmern 58 (auch) Erntegut erfassen, das von der Seite, d.h. von den Querförderbändern 46, 48 einläuft. Die Abstützung der Fördertrommel 58 am Gestell 36, die nur in der Mitte der Fördertrommel 52 durch die Schwinge 64 erfolgt, ermöglicht es, dass die beiden Hälften der Fördertrommel 58 mit den mittleren Teilen 60 und den konischen Bereichen 56 sich freitragend von der Schwinge 64 nach außen erstrecken. Dadurch gibt es keine den Erntegutfluss störenden Verbindungen in Form von Streben o. ä. zwischen den äußeren Enden der Fördertrommel 52 und der Rückwand 54 oder anderen Teilen des tragenden Gestells 36 und die Fördertrommel 52 kann freistehend vor der Rückwand 54 positioniert werden. Demnach erhält man eine optimale Förderwirkung der Fördertrommel 52, insbesondere für von außen einlaufendes Erntegut ohne Gefahr von Erntegutstaus.

## Patentansprüche

1. Erntevorsatz (20) zur Ganzpflanzenernte, der an einer Erntemaschine (10) anbringbar und in einer Vorwärtsrichtung (V) über ein Feld bewegbar ist, umfassend:
ein tragendes Gestell (36),
eine Anzahl an nebeneinander angeordneten Mäh- und Einzugseinrichtungen (40) zum Abschneiden und Abfördern von Pflanzen vom Feld,
ein erstes Querförderband (46) und ein zweites Querförderband (48) zur Querförderung der durch die Mäh- und Einzugseinrichtungen (40) aufgenommenen Pflanzen in Richtung auf die Längsmittelebene des Erntevorsatzes (20),
ein Abgabeförderband (50) zur Förderung der von den Querförderbändern (46, 48) einlaufenden Pflanzen nach hinten zu einer rückwärtigen Abgabestelle des Erntevorsatzes (20), und
eine unterschlächtig arbeitende, langgestreckte Fördertrommel (52) mit einer sich quer zur Vorwärtsrichtung (V) erstreckenden Drehachse, wobei die Fördertrommel (52) oberhalb des Abgabeförderbandes (50), der Abgabeöffnung vorgelagert, durch eine Abstützung mit dem Gestell (36) verbunden ist,
**dadurch gekennzeichnet, dass** die Abstützung der Fördertrommel (58) am Gestell (36) nur in der Mitte der Fördertrommel (52) vorgesehen ist.

2. Erntevorsatz (20) nach Anspruch 1, wobei die Drehachse der Fördertrommel (58) vor einer Rückwand (54) des Erntevorsatzes (20) angeordnet ist.

3. Erntevorsatz (20) nach Anspruch 1 oder 2, wobei die Fördertrommel (52) durch einen fremdkraftbetätigten oder mittels eines mechanischen Antriebsstrangs in Bewegung versetzbaren Antrieb (68) in Drehung versetzbar ist.

4. Erntevorsatz (20) nach einem der vorhergehenden Ansprüche, wobei die Fördertrommel (52) durch eine starr oder schwenkbar am Gestell (36) angebrachte Schwinge (64) mit dem Gestell (36) verbunden ist.

5. Erntevorsatz (20) nach Anspruch 4, wenn rückbezogen auf Anspruch 3, wobei der Antrieb (68) mit der Schwinge (64) verbunden ist und beidseitig mit Ausgangswellen (70) verbunden ist, an denen jeweils ein Mantel der Fördertrommel (52) angebracht ist.

6. Erntevorsatz (20) nach Anspruch 5, wobei die Mäntel der Fördertrommel (52) jeweils als Zylinder (60) mit äußeren konischen Bereichen (56) ausgeführt sind.

7. Erntevorsatz (20) nach Anspruch 6, wobei die konischen Bereiche (56) der Fördertrommel (52) mit wendelförmigen Mitnehmern (58) versehen sind und/oder der zylindrische Teil (60) der Fördertrommel (52) mit sich axial erstreckenden, gezahnten Mitnehmern (62) versehen ist.

8. Erntevorsatz (20) nach einem der Ansprüche 5 bis 7, wobei der Antrieb (68) innerhalb eines an der Schwinge (64) angebrachten Ringes (66) angeordnet ist.

9. Erntevorsatz (20) nach Anspruch 8, wobei die inneren Enden der zylindrischen Teile (60) den Ring (66) in axialer Richtung von außen überdecken.

10. Erntevorsatz (20) nach einem der Ansprüche 4 bis 9, wobei die Schwinge (64) an einer oberen Querstrebe (78) eines Anbaurahmens (38) befestigt ist, der zur Anbringung des Erntevorsatzes (20) an einem Einzugsgehäuse (24) einer Erntemaschine (10) konfiguriert ist.

11. Erntevorsatz (20) nach einem der vorhergehenden Ansprüche, wobei die Fördertrommel (52) symmetrisch zur Längsmittelebene des Erntevorsatzes (20) angeordnet ist.

12. Erntevorsatz (20) nach einem der vorhergehenden Ansprüche, wobei die Mäh- und Einzugseinrichtungen (40) jeweils eine untere Schneidscheibe und darüber angeordnete Förderscheiben mit um ihren Umfang verteilten Aussparungen zur Aufnahme von Pflanzen aufweisen, die mittels der Schneidscheiben von ihren im Boden verbliebenden Wurzeln abgeschnitten werden.

## Geänderte Patentansprüche

### Geänderte Patentansprüche gemäss Regel 137(2) EPÜ.

1. Erntevorsatz (20) zur Ganzpflanzenernte, der an einer Erntemaschine (10) anbringbar und in einer Vorwärtsrichtung (V) über ein Feld bewegbar ist, umfassend:
ein tragendes Gestell (36),
eine Anzahl an nebeneinander angeordneten Mäh- und Einzugseinrichtungen (40) zum Abschneiden und Abfördern von Pflanzen vom Feld,
ein erstes Querförderband (46) und ein zweites Querförderband (48) zur Querförderung der durch die Mäh- und Einzugseinrichtungen (40) aufgenommenen Pflanzen in Richtung auf die Längsmittelebene des Erntevorsatzes (20),
ein Abgabeförderband (50) zur Förderung der von den Querförderbändern (46, 48) einlaufenden Pflanzen nach hinten zu einer rückwärtigen Abgabestelle des Erntevorsatzes (20), und
eine unterschlächtig arbeitende, langgestreckte Fördertrommel (52) mit einer sich quer zur Vorwärtsrichtung (V) erstreckenden Drehachse, wobei die Fördertrommel (52) oberhalb des Abgabeförderbandes (50), der Abgabeöffnung vorgelagert, durch eine Abstützung mit dem Gestell (36) verbunden ist,
**dadurch gekennzeichnet, dass** die Abstützung der Fördertrommel (58) am Gestell (36) nur in der Mitte der Fördertrommel (52) durch eine starr oder schwenkbar am Gestell (36) angebrachte Schwinge (64) vorgesehen ist.

2. Erntevorsatz (20) nach Anspruch 1, wobei die Drehachse der Fördertrommel (58) vor einer Rückwand (54) des Erntevorsatzes (20) angeordnet ist.

3. Erntevorsatz (20) nach Anspruch 1 oder 2, wobei die Fördertrommel (52) durch einen mit ihr antriebsverbundenen, fremdkraftbetätigten oder mittels eines mechanischen Antriebsstrangs in Bewegung versetzbaren Antrieb (68) in Drehung versetzbar ist.

4. Erntevorsatz (20) nach Anspruch 3, wobei der Antrieb (68) mit der Schwinge (64) verbunden ist und beidseitig mit Ausgangswellen (70) verbunden ist, an denen jeweils ein Mantel der Fördertrommel (52) angebracht ist.

5. Erntevorsatz (20) nach Anspruch 4, wobei die Mäntel der Fördertrommel (52) jeweils als Zylinder (60) mit äußeren konischen Bereichen (56) ausgeführt sind.

6. Erntevorsatz (20) nach Anspruch 5, wobei die konischen Bereiche (56) der Fördertrommel (52) mit wendelförmigen Mitnehmern (58) versehen sind und/oder der Zylinder (60) der Fördertrommel (52) mit sich axial erstreckenden, gezahnten Mitnehmern (62) versehen ist.

7. Erntevorsatz (20) nach einem der Ansprüche 4 bis 6, wobei der Antrieb (68) innerhalb eines an der Schwinge (64) angebrachten Ringes (66) angeordnet ist.

8. Erntevorsatz (20) nach Anspruch 7, wenn rückbezogen auf Anspruch 5, wobei die inneren Enden der Zylinder (60) den Ring (66) in axialer Richtung von außen überdecken.

9. Erntevorsatz (20) nach einem der Ansprüche 1 bis 8, wobei die Schwinge (64) an einer oberen Querstrebe (78) eines Anbaurahmens (38) befestigt ist, der zur Anbringung des Erntevorsatzes (20) an einem Einzugsgehäuse (24) einer Erntemaschine (10) konfiguriert ist.

10. Erntevorsatz (20) nach einem der vorhergehenden Ansprüche, wobei die Fördertrommel (52) symmetrisch zur Längsmittelebene des Erntevorsatzes (20) angeordnet ist.

11. Erntevorsatz (20) nach einem der vorhergehenden Ansprüche, wobei die Mäh- und Einzugseinrichtungen (40) jeweils eine untere Schneidscheibe und darüber angeordnete Förderscheiben mit um ihren Umfang verteilten Aussparungen zur Aufnahme von Pflanzen aufweisen, die mittels der Schneidscheiben von ihren im Boden verbliebenden Wurzeln abgeschnitten werden.
